# EUROPÄISCHE PATENTSCHRIFT

(11) **EP 3 887 176 B1**
(45) Veröffentlichungstag und Bekanntmachung des Hinweises auf die Patenterteilung: **03.01.2024**
(21) Anmeldenummer: 19786516.5
(22) Anmeldetag: 07.10.2019
(51) Int. Cl.: B60C 23/04, G06K 19/077, H01Q 1/22, B60C 19/00

(54) **FAHRZEUGREIFEN**
VEHICLE TYRE
PNEUMATIQUE DE VÉHICULE

(30) Priorität: 29.11.2018 DE 102018220562
(43) Veröffentlichungstag der Anmeldung: 06.10.2021
(73) Patentinhaber: Continental Reifen Deutschland GmbH, 30165 Hannover (DE)
(72) Erfinder: EHMKE, Tobias, 30165 Hannover (DE)
(74) Vertreter: Continental Corporation
(86) Internationale Anmeldenummer: PCT/EP2019/076991
(87) Internationale Veröffentlichungsnummer: WO 2020/108833

(56) Entgegenhaltungen:
- EP-A1- 0 505 906
- EP-A1- 0 639 472
- EP-A1- 1 552 968
- WO-A1-2018/224196
- DE-A1- 10 209 580
- FR-A1- 2 936 977
- JP-A- 2013 126 838
- US-A1- 2013 185 929
- US-A1- 2018 174 015
- Smartres: "RFID Catalog 2016/2017", , 1 January 2016 (2016-01-01), pages 1-51, XP055952667, Retrieved from the Internet: URL:https://www.smartres.eu/wp-content/upl oads/Smart-Res-Catalog-2016_17.pdf [retrieved on 2022-08-18]

## Beschreibung

Die Erfindung betrifft einen Fahrzeugreifen.

Transponder können im Reifen für verschiedene Aufgaben eingesetzt werden. Hierzu zählt insbesondere eine eindeutige Reifenidentifikation mit der ein Automobilhersteller u. a. schnell sowie automatisiert feststellen kann, aus welchem Reifenwerk ein bestimmter Reifen geliefert wurde oder ob der gelieferte Reifen der gewünschten Dimension oder Spezifikation entspricht. Moderne Transponder bestehen aus einem Elektronikbauteil oder -chip, in dem Sensorelemente angeordnet sein können sowie aus mindestens einer an dieses Elektronikbauteil angeschlossenen Antenne.

Der Transponder muss insbesondere während des Herstellungsprozesses für Fahrzeugreifen in den Reifen eingebracht werden. Bei einer bestimmten Materialanspruchung können die Transponder zerstört werden.

Die Erfindung betrifft einen Fahrzeugreifen mit einem Laufstreifen, einem Reifengürtel, einer Reifenkarkasse mit mindestens einer Karkasslage, Seitenwänden und einem Reifenwulst mit einem Reifenkern sowie einem Kernreiter,
wobei der Reifenkern im Querschnitt eine Vielzahl von Festigkeitsträgern umfasst und der Kernreiter auf seiner Unterseite an der Oberseite des Reifenkerns angebunden ist, wobei
der Fahrzeugreifen mindestens einen Transponder aufweist,
wobei der Transponder einen Transponderchip und mindestens eine an den Transponderchip angebundende Antenne aufweist.

Die Unterseite des Kernreiters und die Oberseite des Reifenkerns liegen insbesondere aneinander an. Die Unterseite des Kernreiters kann als Kontaktseite des Kernreiters bezeichnet werden. Die Oberseite des Reifenkerns kann als Kontaktseite des Reifenkerns bezeichnet werden.

Bei dem Transponder handelt es sich insbesondere um eine RFID-Vorrichtung. RFID steht für Radio Frequency Identification und dies bedeutet Identifizierung mittels elektromagnetischer Wellen.

Aus dem Stand der Technik sind unterschiedliche Konzepte bekannt, den Transponder im oder am Reifen anzuordnen. Alle herkömmlichen Konzepte besitzen unterschiedliche Nachteile.

Aus dem Stand der Technik sind beispielsweise Fahrzeugreifen mit elektromagnetischen Sende- und Empfangsvorrichtungen bekannt, so z. B. in der EP 0 639 472 A1 oder in der FR 2 936 977 A1.

Der Erfindung liegt die Aufgabe zugrunde, einen Fahrzeugreifen mit einem Transponder bereitzustellen, bei dem der Transponder auf einfache Weise im Fahrzeugreifen integriert werden kann.

Gelöst wird die Aufgabe durch einen Fahrzeugreifen gemäß Anspruch 1. Bei dem erfindungsgemäßen Reifen ist der Transponder im Reifenwulst zwischen der Karkasslage und der Reifeninnenseele angeordnet, wobei die Höhenabmessung in radialer Richtung des Fahrzeugreifens zwischen dem Transponder und der Unterseite des Kernreiters mindestens 3 mm beträgt, wobei der Transponder in einem Anordnungsbereich liegt, wobei sich der Anordnungsbereich bis zu einem ersten Punkt erstreckt, wobei der erste Punkt von dem Karkasslagenumschlagsende maximal 10 mm in eine Richtung räumlich entfernt liegt.

Bei der Richtung handelt es sich um eine solche Richtung, die von der Rotationsachse radial weg weist oder die von dem Reifenkern radial weg weist. Der Fahrzeugreifen folgt grundsätzlich einer Kreisform, radial bedeutet parallel und entlang eines Radius dieses Kreises. Der Transponder ist vollständig von einer Gummiummantelung umgeben, wobei die Gummiummantelung eine maximale Länge von 75 mm aufweist und eine maximale Breite von 15 mm aufweist und eine maximale Dicke von 2,4 mm aufweist. Der Transponder weist zwei helixförmige Antennen auf. Der Transponder ist mit seinen beiden Antennenteilen in Umfangsrichtung des Fahrzeugreifens zum Reifenkern ausgerichtet.

Ein Vorteil der Erfindung ist insbesondere darin zu sehen, dass durch die neuartige Anordnung des Transponders im Reifenwulst der Transponder dauerhaft vor hohen Materialbeanspruchungen geschützt ist. Der Transponder ist in einem Bereich des Reifenwulstes platziert, der beim Abrollen des Fahrzeugreifens nur sehr geringen Materialbelastungen ausgesetzt ist. Der Reifenkern mit den Kerndrähten besitzt eine hohe Steifigkeit und kann sich nur sehr wenig verformen. Außerdem wird der Transponder durch den Kernreiter zusätzlich vor Materialbeanspruchungen geschützt. Der Transponder ist zudem auf der zur Reifeninnenseite gerichteten Kernreiterseite angeordnet, die eine besonders geschützte Position im Reifenwulst darstellt.

Gemäß einer weiteren vorteilhaften Ausführungsform der vorliegenden Erfindung liegt der erste Punkt innerhalb der Seitenwand oder im Wulstbereich.

Gemäß einer weiteren vorteilhaften Ausführungsform der vorliegenden Erfindung ist die Gummiummantelung aus einem solchen Kautschuk ausgebildet, der mit dem Kautschuk chemisch übereinstimmt, der räumlich im Fahrzeugreifen unmittelbar an die Gummiummantelung angrenzt. Der Transponder ist insbesondere zwischen Kautschukelementen des Fahrzeugreifens angeordnet. Diese Kautschukelemente grenzen an den Transponder an.

Gemäß einer weiteren vorteilhaften Ausführungsform der vorliegenden Erfindung ist der Elastizitätsmodul der Gummiummantelung kleiner oder gleich einem Elastizitätsmodul des an die Gummiummantelung unmittelbar angrenzenden Kautschuks des Fahrzeugreifens.

Der Elastizitätsmodul kann beispielsweise bei 25% Materialausdehnung der Gummiummantelung gemessen werden.

Dies bedeutet beispielsweise, dass der Elastizitätsmodul der Gummiummantelung kleiner oder gleich einem höchsten Elastizitätsmodul des an die Gummiummantelung unmittelbar angrenzenden Kautschuks des Fahrzeugreifens ist. Es kann sich dabei um den Elastizitätsmodul auf einer solchen Seite des Transponders handeln, die axial weiter außen oder axial weiter innen liegt. Axial bezieht sich auf die Rotationsachse, um die der Fahrzeugreifen während seines Betriebs in Umfangsrichtung rotieren kann. Der Fahrzeugreifen weist einen Innenraum auf. Axial weiter innen liegend bedeutet räumlich näher am Innenraum liegend als axial weiter außen liegend.

Gemäß einer weiteren vorteilhaften Ausführungsform der vorliegenden Erfindung weist der Fahrzeugreifen einen Wulstverstärker auf. Dieser Wulstverstärker kann zwischen Karkasslagenumschlag des Fahrzeugreifens und Kernreiter des Fahrzeugreifens aber auch zwischen Seitenwand des Fahrzeug und Karkasslagenumschlag im Wulstbereich angeordnet sein.

Dadurch dass der Transponder mit seinen beiden Antennenteilen in Umfangsrichtung zum Reifenkern ausgerichtet ist, besitzt der Transponder eine optimale Ausrichtung im Reifenwulst, um eine optimale Sende- und Empfangsleistung zu gewährleisten.

In einem Fahrzeugreifen gemäß der Erfindung ist der Transponder ein Transponder mit zwei helixförmigen Antennen.

Diese Art von Transpondern weisen eine hohe Dauerhaltbarkeit auf und eigenen sich daher für den Einsatz zwischen Reifenbauteilen.

Anhand mehrerer Ausführungsbeispiele soll die Erfindung näher erläutert werden. Es zeigen:
Fig. 1: einen Wulstbereich eines Fahrzeugreifens;
Fig. 2: eine Aufsicht auf den folienförmige RFID-Transponder;
Fig. 3: eine Aufsicht auf den Transponder mit helixförmigen Antennen;
Fig. 4: eine schematische Darstellung eines Fahrzeugreifens.

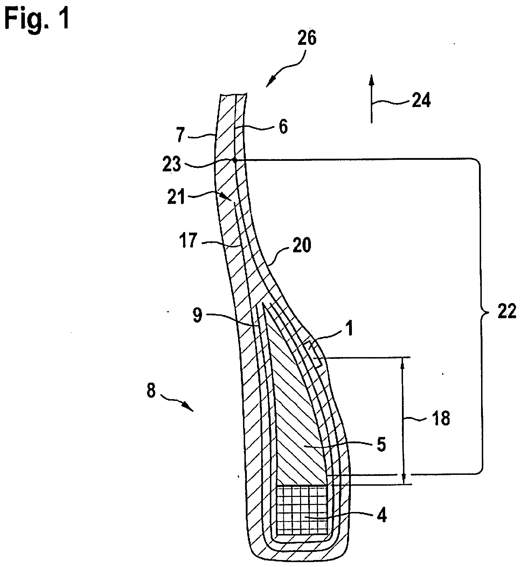

In der Figur 1 ist ein Wulstbereich eines Fahrzeugreifens 26 schematisch dargestellt. Der Fahrzeugreifen 26 weist einen Laufstreifen, einen Reifengürtel, eine Reifenkarkasse mit mindestens einer Karkasslage 6, eine Seitenwand 7 und einen Reifenwulst 8 mit einem Reifenkern 4 sowie einem Kernreiter 5 auf.

Der Reifenkern 4 umfasst im Querschnitt eine Vielzahl von Festigkeitsträgern und der Kernreiter 5 ist auf seiner Unterseite an der Oberseite des Reifenkerns 4 angebunden.

Der Fahrzeugreifen 26 weist einen Transponder 1 auf.

Der Transponder 1 weist einen in der Figur 1 nicht dargestellten Transponderchip 12 und mindestens eine, in der Figur 1 ebenfalls nicht dargestellte, an den Transponderchip 12 angebundende Antenne auf.

Der Transponder 1 ist im Reifenwulst 8 zwischen der Karkasslage 6 und der Reifeninnenseele 20 angeordnet, wobei eine Höhenabmessung 18 in radialer Richtung des Fahrzeugreifens 26 zwischen dem Transponder 1 und der Unterseite des Kernreiters 5 mindestens 3 mm beträgt, wobei der Transponder 1 in einem Anordnungsbereich 22 liegt, wobei sich der Anordnungsbereich 22 bis zu einem ersten Punkt 23 erstreckt, wobei der erste Punkt 23 von dem Karkasslagenumschlagsende 21 maximal 10 mm in eine Richtung 24 räumlich entfernt liegt. Der Fahrzeugreifen 26 folgt grundsätzlich einer Kreisform, radial bedeutet parallel und entlang eines Radius dieses Kreises. Die Richtung 24 weist von einer Rotationsachse des Fahrzeugreifens 26 und von dem Reifenkern 4 weg. Der Transponder 1 liegt dabei stets innerhalb des Fahrzeugreifens 26.

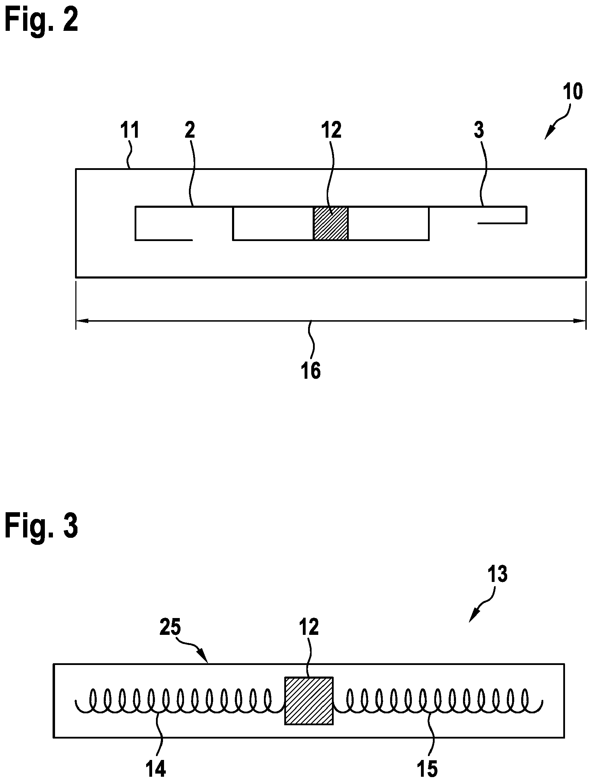

Die Figur 2 zeigt eine Aufsicht auf den folienförmigen RFID-Transponder 10. Der Transponder 10 umfasst im Wesentlichen in seiner Mitte den Transponderchip 12 und eine erste angebundene Antenne 2 und eine zweite angebundene Antenne 3 auf. Alle Bauteile sind in eine Trägerfolie 11 eingebettet, die aus Kunststoff ausgebildet ist und eine hohe Flexibilität besitzt. Die Materialdicke des folienförmigen RFID-Transponders 10 beträgt weniger als 1 mm. Die Länge 16 des Transponders 10 beträgt beispielsweise 70 mm.

Die Figur 3 zeigt ein Ausführungsbeispiel für einen Transponder 13 mit zwei helixförmigen Antennen 14 und 15, die an den Transponderchip 12 angebunden sind. Der Transponder 13 ist in Aufsicht dargestellt.

Die helixförmigen Antennen 14 und 15 sind aus einem Metall ausgebildet und besitzen eine hohe Dauerfestigkeit. Der Transponder 13 weist insbesondere eine Gummiummantelung 25 auf. Die Gummiummantelung 25 ist im Schnitt dargestellt.

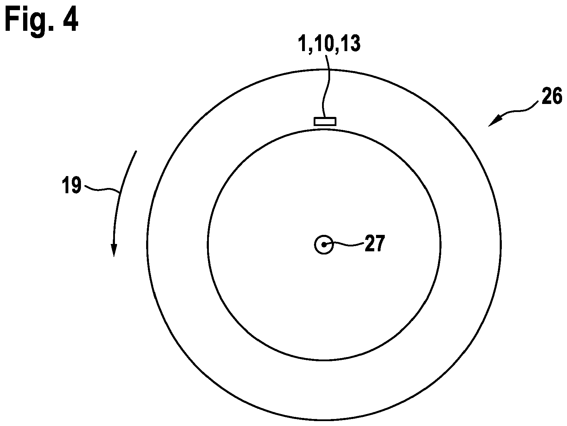

In der Figur 4 ist ein erfindungsgemäßer Fahrzeugreifen 26 schematisch im Schnitt dargestellt. Der Fahrzeugreifen 26 ist um eine Rotationsachse 27 in eine Umfangsrichtung 19 rotierbar. Die Umfangsrichtug 19 kann auch als Umlaufrichtung bezeichnet werden. Der Fahrzeugreifen 26 weist mindestens einen Transponder 1, 10, 13 auf. Es kann sich bei dem Transponder 1, 10 oder 13 um einen Transponder 1, um einen Transponder 10 oder um einen Transponder 13 handeln.

### Bezugszeichenliste (ist Teil der Beschreibung)

- 1: Transponder
- 2: Erste angebundene Antenne
- 3: Zweite angebundene Antenne
- 4: Reifenkern
- 5: Kernreiter oder Apex
- 6: Karkasslage
- 7: Seitenwand
- 8: Reifenwulst
- 9: Wulstverstärker
- 10: Folienförmiger RFID-Transponder
- 11: Trägerfolie
- 12: Transponderchip
- 13: Transponder mit zwei helixförmigen Antennen
- 14: Erste helixförmige Antenne
- 15: Zweite helixförmige Antenne
- 16: Länge des folienförmigen Transponders
- 17: Äußerer Lagenumschlag der Karkasslage
- 18: Höhe zwischen Transponder und Unterseite des Kernreiters
- 19: Umfangsrichtung
- 20: Reifeninnenseele
- 21: Karkasslagenumschlagsende
- 22: Anordnungsbereich
- 23: Erster Punkt
- 24: Richtung
- 25: Gummiummantelung
- 26: Fahrzeugreifen
- 27: Rotationsachse

## Patentansprüche

1. Fahrzeugreifen (26) mit einem Laufstreifen, einem Reifengürtel, einer Reifenkarkasse mit mindestens einer Karkasslage (6), Seitenwänden (7) und einem Reifenwulst (8) mit einem Reifenkern (4) sowie einem Kernreiter (5),
wobei der Reifenkern (4) im Querschnitt eine Vielzahl von Festigkeitsträgern umfasst und der Kernreiter (5) auf seiner Unterseite an der Oberseite des Reifenkerns (4) angebunden ist, wobei der Fahrzeugreifen (26) einen Transponder (1) aufweist,
wobei der Transponder (1) einen Transponderchip (12) und mindestens eine an den Transponderchip (12) angebundende Antenne (2, 3, 14, 15) aufweist, wobei der Transponder (1) zwischen der Karkasslage (6) und der Reifeninnenseele (20) angeordnet ist,
wobei eine Höhenabmessung (18) in radialer Richtung des Fahrzeugreifens (26) zwischen dem Transponder (1) und der Unterseite des Kernreiters (5) mindestens 3 mm beträgt, wobei der Transponder (1) in einem Anordnungsbereich (22) liegt, wobei sich der Anordnungsbereich (22) bis zu einem ersten Punkt (23) erstreckt, wobei der erste Punkt (23) von einem Karkasslagenumschlagsende (21) maximal 10 mm in eine Richtung (24) räumlich entfernt liegt, wobei es sich bei der Richtung (24) um solche Richtung handelt, die von der Rotationsachse radial weg weist oder die von dem Reifenkern radial weg weist und, dass der Transponder (1) vollständig von einer Gummiummantelung (25) umgeben ist, wobei die Gummiummantelung (25) eine maximale Länge von 75 mm aufweist und eine maximale Breite von 15 mm aufweist und eine maximale Dicke von 2,4 mm aufweist, **dadurch gekennzeichnet, dass** der Transponder (1) mit seinen beiden Antennenteilen (2, 3, 14, 15) in Umfangsrichtung (19) des Fahrzeugreifens (26) zum Reifenkern (4) ausgerichtet ist und der Transponder (1) ein Transponder (13) mit zwei helixförmigen Antennen (14, 15) ist.

2. Fahrzeugreifen (26) nach Anspruch 1, **dadurch gekennzeichnet, dass** der erste Punkt (23) innerhalb der Seitenwand (7) oder im Reifenwulst (8) liegt.

3. Fahrzeugreifen (26) nach dem vorhergehenden Anspruch, **dadurch gekennzeichnet, dass** die Gummiummantelung (25) aus einem solchen Kautschuk ausgebildet ist, der mit dem Kautschuk chemisch übereinstimmt, der räumlich im Fahrzeugreifen (26) unmittelbar an die Gummiummantelung (25) angrenzt.

4. Fahrzeugreifen (26) nach Anspruch 1, **dadurch gekennzeichnet, dass** der Elastizitätsmodul der Gummiummantelung (25) kleiner oder gleich einem Elastizitätsmodul des an die Gummiummantelung (25) unmittelbar angrenzenden Kautschuks des Fahrzeugreifens (26) ist.

5. Fahrzeugreifen (26) nach einem der vorhergehenden Ansprüche,
**dadurch gekennzeichnet, dass** der Fahrzeugreifen (26) einen Wulstverstärker (9) aufweist.

## Claims

1. Vehicle tyre (26) comprising a tread, a tyre breaker belt, a tyre carcass with at least one carcass ply (6), sidewalls (7) and a tyre bead (8) with a bead core (4) and a bead filler (5),
wherein the bead core (4) comprises a multiplicity of reinforcing elements in cross section and the bead filler (5) on its underside is attached to the top side of the bead core (4), wherein the vehicle tyre (26) has a transponder (1), wherein the transponder (1) has a transponder chip (12) and at least one antenna (2, 3, 14, 15) attached to the transponder chip (12), wherein the transponder (1) is arranged between the carcass ply (6) and the tyre inner liner (20),
wherein a height dimension (18) in the radial direction of the vehicle tyre (26) between the transponder (1) and the underside of the bead filler (5) is at least 3 mm, wherein the transponder (1) is in an arrangement region (22), wherein the arrangement region (22) extends to a first point (23), wherein the first point (23) is spatially at most 10 mm away from a carcass ply turn-up end (21) in one direction (24), wherein the direction (24) is that direction that points radially away from the axis of rotation or which points radially away from the bead core, and in that the transponder (1) is completely surrounded by a rubber covering (25), wherein the rubber covering (25) has a maximum length of 75 mm and a maximum width of 15 mm and a maximum thickness of 2.4 mm, **characterized in that** the transponder (1) with its two antenna parts (2, 3, 14, 15) is aligned towards the bead core (4) in the circumferential direction (19) of the vehicle tyre (26) and the transponder (1) is a transponder (13) with two helical antennas (14, 15).

2. Vehicle tyre (26) according to Claim 1, **characterized in that** the first point (23) is inside the sidewall (7) or in the tyre bead (8).

3. Vehicle tyre (26) according to the preceding claim, **characterized in that** the rubber covering (25) is made from such a rubber which has the same chemical composition as the rubber that spatially directly adjoins the rubber covering (25) in the vehicle tyre (26).

4. Vehicle tyre (26) according to Claim 1, **characterized in that** the modulus of elasticity of the rubber covering (25) is less than or equal to a modulus of elasticity of the rubber of the vehicle tyre (26) that directly adjoins the rubber covering (25).

5. Vehicle tyre (26) according to one of the preceding claims, **characterized in that** the vehicle tyre (26) comprises a bead reinforcer (9).

## Revendications

1. Pneumatique de véhicule (26) avec une bande de roulement, une ceinture de pneumatique, une carcasse de pneumatique avec au moins une couche de carcasse (6), des parois latérales (7) et un talon de pneumatique (8) avec un noyau de pneumatique (4) ainsi qu'un bourrage sur tringle (5),
le noyau de pneumatique (4) comprenant dans la section transversale une pluralité de supports de résistance et le bourrage sur tringle (5) étant relié sur son côté inférieur au côté supérieur du noyau de pneumatique (4), le pneumatique de véhicule (26) présentant un transpondeur (1), le transpondeur (1) présentant une puce de transpondeur (12) et au moins une antenne (2, 3, 14, 15) reliée à la puce de transpondeur (12), le transpondeur (1) étant agencé entre la couche de carcasse (6) et l'âme intérieure de pneumatique (20),
une dimension en hauteur (18) dans la direction radiale du pneumatique de véhicule (26) entre le transpondeur (1) et le côté inférieur du bourrage sur tringle (5) étant d'au moins 3 mm, le transpondeur (1) étant situé dans une zone d'agencement (22), la zone d'agencement (22) s'étendant jusqu'à un premier point (23), le premier point (23) étant éloigné dans l'espace d'au maximum 10 mm d'une extrémité de retournement de couche de carcasse (21) dans une direction (24), la direction (24) consistant en une direction qui est opposée radialement à l'axe de rotation ou qui est opposée radialement au noyau du pneu, et en ce que le transpondeur (1) est entièrement entouré d'une enveloppe en caoutchouc (25), l'enveloppe en caoutchouc (25) présentant une longueur maximale de 75 mm et une largeur maximale de 15 mm et une épaisseur maximale de 2,4 mm,
**caractérisé en ce que** le transpondeur (1) est orienté avec ses deux parties d'antenne (2, 3, 14, 15) dans la direction périphérique (19) du pneumatique de véhicule (26) vers le noyau de pneumatique (4), et le transpondeur (1) est un transpondeur (13) avec deux antennes (14, 15) en forme d'hélice.

2. Pneumatique de véhicule (26) selon la revendication 1, **caractérisé en ce que** le premier point (23) est situé à l'intérieur de la paroi latérale (7) ou dans le talon de pneumatique (8).

3. Pneumatique de véhicule (26) selon la revendication précédente, **caractérisé en ce que** l'enveloppe en caoutchouc (25) est réalisée à partir d'un caoutchouc qui correspond chimiquement au caoutchouc qui est directement adjacent à l'enveloppe en caoutchouc (25) dans l'espace du pneumatique de véhicule (26).

4. Pneumatique de véhicule (26) selon la revendication 1, **caractérisé en ce que** le module d'élasticité de l'enveloppe en caoutchouc (25) est inférieur ou égal à un module d'élasticité du caoutchouc du pneumatique de véhicule (26) directement adjacent à l'enveloppe en caoutchouc (25).

5. Pneumatique de véhicule (26) selon l'une quelconque des revendications précédentes, **caractérisé en ce que** le pneumatique de véhicule (26) présente un renfort de talon (9).
